# EUROPEAN PATENT APPLICATION

(11) **EP 4 675 091 A1**
(43) Date of publication of application: **07.01.2026**
(21) Application number: 24186308.3
(22) Date of filing: 03.07.2024
(51) Int. Cl.: F01N 13/18, F02B 33/44, F02M 35/10, F16L 37/50

(54) **AXIALLY ADAPTABLE CONNECTION**

(71) Applicant: MoldTecs-01-2022 GmbH, 38667 Bad Harzburg (DE)
(72) Inventor: The designation of the inventor has not yet been filed
(74) Representative: STT Sozietät Thews & Thews

(57) **Abstract**

The invention relates to a movable and tight connecting device (3) for fluids to compensate construction-related deviations between two components, comprising a first support (1) and a second support (2) each having an end section (1.1, 2.1) and a common centre axis (C), wherein the two supports (1, 2) are for assembly inserted with the end sections into one another in axial direction and the two supports (1, 2) are bayonet connected to one another by a connecting device (3). The connection should compensate high deviations in the main axis without the use of any soft material. The connecting device (3) is providing a tight connection and a positive locking in both axial directions in such a way that the second support (2) which comprising a radial pin (3.2) can be connected in several axial positions relative to the first support (1) comprising a corresponding sleeve (3.1) and the positions differ by a distance D of at least 1 mm in the axial direction wherein the pin (3.2) is guided and locked in a recess (3.3) of the sleeve (3.2).

## Description

### TECHNICAL FIELD

The invention relates to an agile connection device between two exhaust components e. g. interfaces for air intake or exhaust systems for an internal combustion engine or hybrid engine. Each of the two exhaust components has a support through which the two components are connected. Especially the invention relates to a movable and tight connection for fluids to compensate construction-related deviations between two components, comprising a first support and a second support each having an end section and a common centre axis, wherein the two supports are for assembly inserted with the end sections into one another in axial direction and the two supports are connected to one another by a connecting device.

### BACKGROUND

An usual concept for a non-agile fluid tight connection between a manifold interface and an exhaust support interface is shown in US 4,289,169 B1. This connection is a fixed connection with a gasket and a metallic clip. This connection allows to compensate few displacements between the manifold interface and the exhaust support only in radial and circumferential direction by a small variation in view of the gasket. Such fixed connections cannot compensate dimensional deviations in the main axis of the flow cross-section. Any movement in axial direction would lead to leakage.

An existing concept for air intake systems to compensate construction-related deviations in axial direction is to use a soft support made of rubber, silicon, or other materials. In that case due to the soft material, it is possible to have some compensation also in the main axis but it is limited depending on the soft support material and its design (radius, diameter). This solution is usually expensive and is not good regarding acoustic performance because the soft materials are less efficient than the rigid one to filter the noise that goes inside the air supports.

It is an object of the present invention to design and arrange a connection, especially between interfaces for air intake or exhaust systems that can compensate high deviations in the main axis without the use of any soft material.

According to an aspect of the invention, the problem is solved that connecting device is providing a tight connection and a positive locking in both axial directions in such a way that the second support can be moved in several axial positions relative to the first support and the positions differ by a distance D of at least 1 mm in the axial direction. The connecting device is closing the connection and provides two stop positions in that closed status with a distance in axial direction which corresponds to the distance D. This enables a connection between the two supports even if the two exhaust components are at different distances in the axial direction. The connection is possible in the range over the distance defined by the two stops. This positive locking allows to reduce the number of components, to use soft parts and improve the performance of the system.

Due to the inventive positive locking between the two supports, the locked and tight connection is movable in the axial direction. The connection of the two supports is tight in any of the possible positions between the two stop positions and during the movement between the two stop positions in the range of the distance D. At both stop positions the connection is locked in axial direction. The two supports are indirectly connected to each other by the connecting device. The tight connected second support can be moved into several axial positions relative to the tight connected first support. The tightness is provided with a sealing element that is preferably arranged in the radial direction between the two supports. The sealing element allows axial displacement at least relative to one of the two supports or relative to both supports. A sealing element is to be understood as a seal for various fluids, in particular for hot air or gases including exhaust gases from combustion engines.

The tightness between the two supports is provided in any position in the range of the distance D. This principle of being able to move the two supports relative to each other in a tight connection is also an essential inventive feature of the claimed method to compensate design-related dimensional deviations between two components.

The support can be a part of a device such as a pipe or an intake or an exhaust support or a housing of an intake or exhaust system or a support of an intake or exhaust device. Especially it is also provided, that the first support is a turbo outlet of a turbo charger and the second support is a support of a charge turbo-air-housing, each a component of a combustion engine.

The axial direction, the radial direction, the circumferential direction (circumferentially) and the coaxial positions have a meaning in relation to the centre axis C. A rotation or pivoting is also in relation to the centre axis C and means the movement in circumferential direction. An axial movement is also in relation to the centre axis C a movement in axial direction. For the purposes of the invention, an axial movement is to be understood as meaning the same as a translational movement.

In a preferred and very simple solution it is provided that the connecting device is at least partly mounted at the respective support or the connecting device is at least partly integrated in the respective support. According to a relevant aspect of the invention the connecting device has at least two components which can be directly positively locked to one another in both axial directions, wherein one component being arranged on the first support and the other component being arranged on the second support. This makes it possible for the two supports to be connected to each other indirectly in a positive locking manner. The positive locking connection between the two supports is thus made with the respective end section of each support, with which they are inserted into each other.

It is advantageous in terms of flexibility that the first support is inserted into the second support or the second support is inserted into the first support. A simple connecting device is possible for both options, which overlaps from one support to the other. Within the embodiment in which the first support is inserted into the second support, the connecting device forms with the end section of the first support a circumferential receptacle around the first support, so that the end section of the second support is inserted into the receptacle between the first support and the connecting device. In the embodiment according to which the second support is inserted into the first support, no receptacle is provided between the first support and the connecting device.

In relation to an easy closable connection, the component arranged on the first support is rotatable relative to the first support in the circumferential direction and/or the two parts are connected to one another without tools and can be detached from one another without tools. A key aspect of the invention is that the tight connection, which is moveable in the axial direction, can be closed and released manually without a tool. A simple approach for this is a type of bayonet lock with a component that is for closing the connection to pivot or swivel around the centre axis C for less than 90 degrees. Alternatively, the connection can be made via a clip or a thread or any arrangement of plugs.

Regarding a bayonet lock, it is advantageous that the component on the first support is designed as a sleeve put on the first support and the component arranged on the second support is designed as a pin projecting in the radial direction on the second support. A bayonet lock can be advantageously produced with a sleeve that can be rotated or at least pivoted around the support. The sleeve is fixed to the support in an axial direction and has slots or grooves to insert the pin. The pin is integrated in the second support, for example in such a way that the second support and the pin are moulded as one component. By pivoting or swivelling the sleeve, the pin can be moved into and in the slots or grooves. This movement is closing the sleeve with the pin in axial direction and is closing the connection.

For a straight connection with the pin assembled or moulded at the support it is advantageous that the sleeve protrudes in the axial direction on the end section of the second support or at least partly on the second support. This allows the sleeve to be connected directly to the second support.

The advantages of a bayonet lock are, that the sleeve has a recess for the pin with at least two, preferred three adjoining sections, wherein the pin can be inserted into the first section from the outside in the axial direction, wherein in the second section the sleeve can be rotated relatively to the pin in the circumferential direction and wherein the pin can be moved relatively to the sleeve in the third section in both axial directions to a limited extent by the distance D. The recess can be designed at least partially as a slot or at least partially as a groove. Fixing and centring the sleeve at the support is advantageously achieved in that, the sleeve having a bearing surface and having a contact with the bearing surface in the radial direction and in the axial direction against at least one surface of the first support. This ensures that the sleeve is centred in relation to the central axis on the surface of the first support. The second support is also centred by centring the sleeve. For this purpose, the second support is supported in the sleeve in a radial direction.

Simple centring is achieved in that, the bearing surface and the surface are preferably each conical or spherical. Such geometries allow bearing support in axial and radial directions together.

### BRIEF DESCRIPTION OF THE DRAWINGS

Various aspects of the invention, including its features and advantages, will be readily understood from the example embodiments discussed in the following detailed description and the accompanying drawings, in which:
- Figure 1: illustrates a perspective view of a movable and tight connection device with two supports being part of an turbo-air-housing and a turbo charger;
- Figure 2a: illustrates a sectional view of a movable and tight connection device with the two supports in a first position;
- Figure 2b: illustrates a sectional view of a movable and tight connection device with the two supports in a second position;
- Figure 3: illustrates a schematic view of a first connection architecture;
- Figure 4: illustrates a schematic view of a second connection architecture;
- Figure 5: illustrates a perspective view of a sleeve;
- Figure 5a: illustrates a movement pattern of the pin relative to the sleeve;
- Figure 6: illustrates a perspective view on the backside of a sleeve;
- Figure 7: illustrates a sectional view of the connection device according to the cutting line of figure 2b.

### DETAILED DESCRIPTION

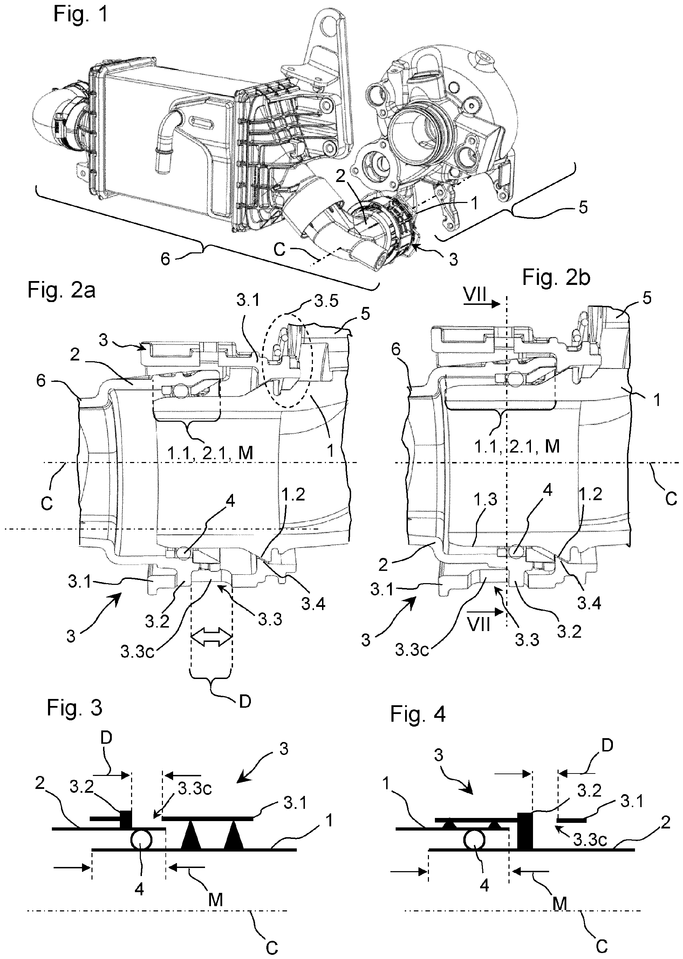

The perspective view according to fig. 1 shows a preferred embodiment of a movable and tight connection between a turbocharger 5 and an turbo-air-housing 6 as hot air intake components of an internal combustion engine. Such exhaust components 5, 6 are connected via supports 1, 2 and are assembled in the engine compartment of a motor vehicle. The respective position of the individual exhaust component 5, 6 is exactly predetermined relative to the overall construction but not relative to each other. With these predetermined positions, there are deviations in the relative positions of the two components 5, 6 to each other and thus also regarding the two supports 1, 2 to be connected in various directions. When assembling the connection of the two supports 1, 2 of the exhaust components 5, 6 the constructive deviations must be compensated for. A locking device 3 according to the invention enables such constructional deviations in the direction of the central axis C of several millimetres to be compensated for. For this purpose, it is provided that the two supports 1, 2 can be tightly connected to each other in different axial positions.

Fig. 2a and 2b illustrate a sectional view of a movable and tight connection device 3 with the two supports 1, 2 being connected to each other. The first support 1 is part of the turbo charger 5 and the second support 2 is part of the turbo air-housing 6. To connect the both supports 1, 2 they are inserted into each other along an end section 1.1, 2.1 by a dimension T to guide fluids. The internal diameters of the two supports 1, 2, which are not described in detail, are substantially the same size to minimise flow resistance. Depending on the deviation of the relative position of the first support 1 in relation to the second support 2 in the axial direction, i.e. in the direction of the centre axis C, the two end sections 1.1, 2.1 are inserted into each other to a greater or lesser extent. A sealing element 4 is provided in the radial direction between the two supports 1, 2 to seal the connection. The basic principle of this connection is also shown schematically in Figures 3 and 4. The embodiments shown in figures 3 and 4 differ in that the first support 1 is inserted into the second support 2 in figure 3 and the second support 2 is inserted into the first support 1 in the opposite way in figure 4.

Essential to the invention for all embodiments shown in Figures 1 to 7 is that a movement of the two supports 1, 2 relative to each other is possible and limited by a distance D. The connecting device provides two stops with that distance D. At both stop positions the connection is locked in axial direction. Therefore a locking device 3 is provided that is positively coupling the two supports 1, 2 to each other. That has the effect, that the connection is closed. The locking device 3 is designed as a bayonet lock with a sleeve 3.1 with a recess 3.3 for a pin 3.2 of the supports 1, 2. The recess 3.3 is formed from three adjoining sections 3.3a-3.3c. The three adjoining sections 3.3a-3.3c extend in axial direction or in circumferential direction and are adjacent to each other. The recess 3.3 respectively the adjoining sections 3.3a-3.3c are formed by grooves or slots in the sleeve 3.1. The grooves and slots are connected to each other and form an H-shaped movement pattern. A total of four recesses 3.3 are arranged in the circumferential direction around this sleeve 3.1. In addition, four pins 3.2 arranged in the circumferential direction are provided, which engage in the adjoining sections 3.3a-3.3c. The sleeve 3.1 is fixed to one of the two supports 1, 2 and the pin 3.2 is fixed to the other support 1, 2 in the axial direction. The two supports 1, 2 are indirectly coupled to each other by coupling of the sleeve 3.1 with the pins 3.2. For the coupling, the pin 3.2 is inserted into the sleeve 3.1 in several adjoining sections 3.3a-3.3c.

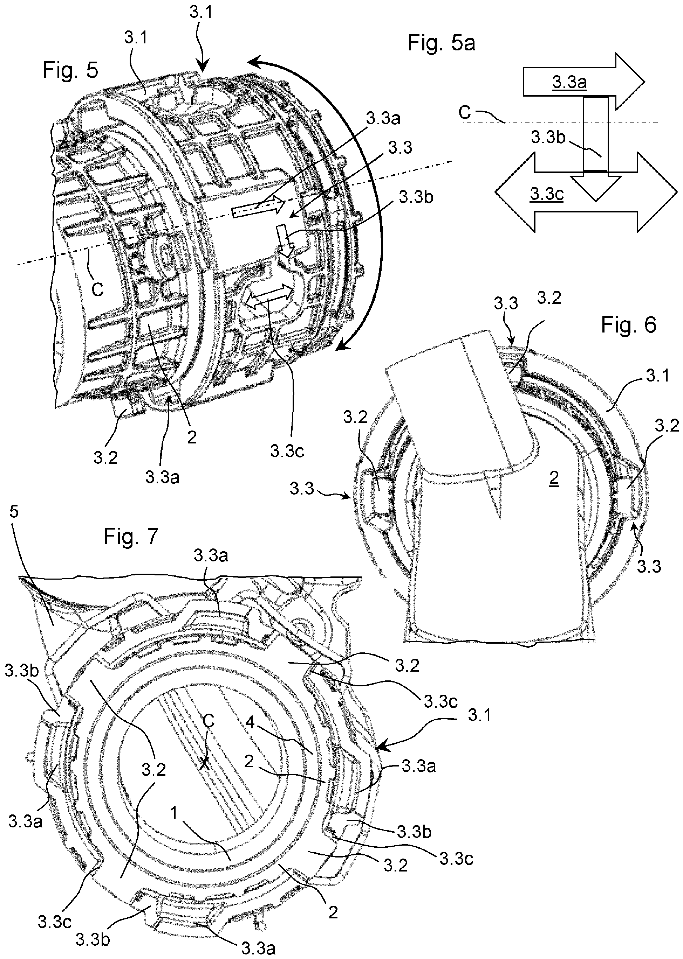

Fig. 5a illustrates a movement pattern of the pin 3.2 relative to the sleeve 3.1 for the bayonet connection. In the first section 3.3a, the pin 3.2 moves in the direction of the centre axis C into the sleeve 3.1. The sleeve 3.1 is then swivelled by a few degrees in the circumferential direction so that the pin 3.2 moves from the section 3.3a to the third section 3.3c within the second section 3.3b. After swivelling the sleeve 3.1, the pin 3.2 is positioned in the third section 3.3c. The third section 3.3c has a length in the axial direction that corresponds to the sum of the distance D and the diameter of the pin 3.2. In this position the pin 3.2 can move over the distance D relatively to the sleeve 3.1. A corresponding range of movement is provided for the two supports 1, 2 relatively to each other.

In the embodiment, shown in figures 2a, 2b and 3, the first support 1 is inserted into the second support 2 with the respective end section 1.1, 2.1 by a measure M. The sealing element 4 is fixed to the inner surface of the second support 2 in the axial direction. This fixation can be achieved by several separate components mounted in the second support 2 or via a circumferential groove in the second support 2. The sealing element 4 slides on an outer sealing surface 1.3 of the first support 1 in the axial direction and seals the connection via this sealing surface 1.3. In the embodiment, shown in fig. 4, the second support 2 is inserted into the first support 1 in the opposite manner. For all embodiments shown, the sleeve 3.1 is fitted and mounted on the first support 1 so that it is fixed in the axial direction relative to the first support 1 and it can rotate or swivel in the circumferential direction. The sleeve 3.1 is fixed in the axial direction by means of a unit 3.5, which is not described in more detail and comprises a retaining ring on the sleeve 3.1 and a groove in the first support 1 in which the retaining ring engages. The sleeve 3.1 having a conical bearing surface 3.4 directed in the axial and in radial direction. Together with a corresponding conical surface 1.2 of the first support 1 a bearing is provided in the axial and in the radial direction. The two conical surfaces 1.2 and 3.4 provide in addition to an axial bearing also a centring of the sleeve 3.1 in relation to the centre axis C. The pin 3.2 is structurally integrated into the second support 2 and is not attached to the second support 2 as a separate component.

According to the embodiment example shown in figure 4, the principle of the connection is almost identical to that described above. The pin 3.2 being longer in the radial direction is extending beyond the sealing element 4 and the first connection piece 1 through the sleeve 3.1.

Once the connection has been assembled, i.e. after the two supports 1, 2 have been inserted into each other and the bayonet lock has been closed, the pin 3.2 can only move in the axial direction within the third section 3.3c by the limited distance D. Accordingly, the relative movement of the two supports 1, 2 is possible and limited by this distance D. This distance D makes it possible to compensate for the deviation in the axial direction during assembly. The locking device 3 limits the movement of the supports 1, 2 to that distance D, which is correspondingly smaller than the measure M by which the two supports 1, 2 are inserted into each other. Accordingly, the following applies: 1 mm < D < M. Not the measure of 1 mm is important, it is the solution that a movement is possible with that closed and tight connection. The range of this measure M can be 0,5 mm, or 3 mm or 0,2 to 10 mm.

Figure 5 illustrates a perspective view of a sleeve 3.1 and the second support 2. When the two supports 1, 2 are inserted into each other, the sleeve 3.1 is swivelled in the circumferential direction to such an extent that each of the four first sections 3.3a mate with one of the four pins 3.2 in the axial direction. The arrows depicted on the sleeve 3.1 show the movement pattern of the pin 3.2 relative to the sleeve 3.1. This movement pattern is shown enlarged in figure 5a. The pin 3.2 moves relative to the sleeve 3.1 essentially parallel or at right angles to the direction of the centre axis C.

Figure 6 illustrates a perspective view on the backside of a sleeve 3.2, which is placed on the second support 2. The position of the sleeve 3.1 in relation to the second support 2 is identical to the position shown in figure 5.

Figure 7 illustrates a sectional view of the connection device according to the cutting line of fig. 2b. The respective pin 3.2 is arranged in its end position in the third section 3.3c. The seal between the two supports 1, 2 is provided by the sealing element 4.

### List of references

- 1: first support
- 1.1: end section
- 1.2: surface
- 1.3: sealing surface
- 2: second support
- 2.1: section
- 3: locking device
- 3.1: sleeve
- 3.2: pin
- 3.3: recess
- 3.3a-c: adjoining sections
- 3.3a: first section
- 3.3b: second section
- 3.3c: third section
- 3.4: bearing surface
- 3.5: assembly
- 4: sealing element
- 5: turbo charger
- 6: turbo-air-housing
- BS: with
- C: centre axis
- D: dimension
- M: measure

## Claims

1. A movable and tight connection device (3) for fluids to compensate construction-related deviations between two components, comprising a first support (1) and a second support (2) each having an end section (1.1, 2.1) and a common centre axis (C), wherein the two supports (1, 2) are for assembly inserted with the end sections (1.1, 2.1) into one another in axial direction and the two supports (1, 2) are connected to one another by a connecting device (3),
**characterised in that** the connecting device (3) is providing a tight connection and a positive locking in both axial directions in such a way that the second support (2) can be connected in several axial positions relative to the first support (1) and the positions differ by a distance D of at least 1 mm in the axial direction.

2. An agile connection according to claim 1,
**characterised in that** the connecting device (3) has at least two components (3.1, 3.2) which can be directly positively locked to one another in both axial directions, wherein one component (3.1) being arranged on the first support (1) and the other component (3.2) being arranged on the second support (2).

3. An agile connection according to claim 1 or 2,
**characterised in that** the first support (1) is inserted into the second support (2) or the second support (2) is inserted into the first support (1).

4. An agile connection according to one of the preceding claims, **characterised in that** the component (3.1) arranged on the first support (1) is rotatable relatively to the first support (1) in the circumferential direction and/or the two parts (3.1, 3.2) are connected to one another without tools and can be detached from one another without tools.

5. An agile connection according to one of the preceding claims, **characterised in that** the component (3.1) on the first support (1) is designed as a sleeve (3.1) put on the first support (1) and the component (3.2) arranged on the second support (2) is designed as a pin (3.2) projecting in the radial direction on the second support (2).

6. An agile connection according to one of the preceding claims, **characterised in that** the sleeve (3.1) protrudes in the axial direction on the end section (2.1) of the second support (2) or at least partly on the second support (2).

7. An agile connection according to one of the preceding claims, **characterised in that** the sleeve (3.1) has a recess (3.3) for the pin (3.2) with at least two, preferred three adjoining sections (3.3a-c), wherein the pin (3.2) can be inserted into the first section (3.3a) from the outside in the axial direction, wherein in the second section (3.3b) the sleeve (3.1) can be rotated relative to the pin (3.2) in the circumferential direction and wherein the pin (3.2) can be moved relatively to the sleeve (3.1) in the third section (3.3c) in both axial directions to a limited extent by the distance D.

8. An agile connection according to one of the preceding claims, **characterised in that** the sleeve (3.1) having a bearing surface (3.4) and having a contact with the bearing surface (3.4) in the radial direction and in the axial direction against at least one surface (1.2) of the first support (1).

9. An agile connection according to one of the preceding claims, **characterised in that** the bearing surface (3.2) and the surface (1.1) are preferably each conical or spherical.

10. An agile connection according to one of the preceding claims, **characterised in that** the first support (1) is a turbo outlet of a turbo charger (5) and the second support (2) is a support of a charge turbo-air-housing (6), each a component of a combustion engine.

11. A system consisting of an agile connection according to one or more of the preceding claims with an exhaust gas system and/or a turbo charger and/or an internal combustion engine and/or an air charge system.

12. Method to compensate design-related dimensional deviations between two components with a connecting device (3) with two supports (1, 2) with a common centre axis (C), in which a first support (1) is for assembling inserted in axial direction into a second support (2) by a measure M and the first support (1) is sealed relative to the second support (2) with a sealing element (4) arranged in the radial direction between the first support (1) and a connecting device (3) forms a positive locking in both axial directions in such a way that the second support (2) can be assembled and moved in several axial positions relative to the first support (1) and the positions differ by a distance D in the axial direction, with the requirement that 1 mm < D < M.
